(19) Europäisches Patentamt

European Patent Office

Office européen des brevets

(11) Veröffentlichungsnummer: **0 316 785**

**A1**

# (12) EUROPÄISCHE PATENTANMELDUNG

(21) Anmeldenummer: 88118790.0

(22) Anmeldetag: 11.11.88

(51) Int. Cl.4: **C02F 1/62 , C02F 1/70**

(30) Priorität: 17.11.87 DE 3738958

(43) Veröffentlichungstag der Anmeldung:
**24.05.89 Patentblatt 89/21**

(84) Benannte Vertragsstaaten:
**CH DE FR GB IT LI NL**

(71) Anmelder: **BASF Aktiengesellschaft
Carl-Bosch-Strasse 38
D-6700 Ludwigshafen(DE)**

(72) Erfinder: **Habermann, Wolfgang
Gonsenheimer Spiess 8
D-6500 Mainz 1(DE)**
Erfinder: **Hammes, Peter, Dr.
Haagweg 14
D-6701 Ruppertsberg(DE)**
Erfinder: **Haag, Armin, Dr.
Friedrich-Ebert-Strasse 27
D-6945 Hirschberg(DE)**
Erfinder: **Kolbinger, Hans Jürgen, Dr.
Westring 60
D-6718 Gruenstadt(DE)**

(54) **Verfahren zur Entfernung von Kupfer aus Abwasser.**

(57) Die Anmeldung betrifft ein Verfahren zur Zementation von Kupfer mit Eisengranulaten aus Abwässern, die Mineralsäureanionen enthalten, wobei das Potential des Eisens, bezogen auf die Silber-Silberchloridelektrode in gesättigter Kaliumchloridlösung -250 mV bis -500 mV beträgt. Das Potential des Eisengranulates wird durch elektrochemische Polarisation gegen eine Hilfselektrode oder über den Sauergehalt, die Sauerstoffkonzentration und die Hydrodynamik des Abwassers bzw. den effektiven Stoffaustauschkoeffizienten eingestellt.

EP 0 316 785 A1

## Verfahren zur Entfernung von Kupfer aus Abwasser

Die vorliegende Erfindung betrifft ein Verfahren zur Entfernung von Kupfer aus Abwässern, die Anionen von Mineralsäuren enthalten, durch Zementation mit Eisengranulaten.

Bei der Rückgewinnung von Kupfer aus sauren Abwässern setzt man in der Technik als Verfahren die Zementation von Kupferionen mit metallischem Eisen ein. Der Prozeß beruht auf der Reduktion von Kupferionen durch Eisen gemäß der Gleichung

$$Cu^{++} + Fe^{\cdot} \rightarrow Cu^{\cdot} + Fe^{++}$$

wobei anstelle von Kupferionen Eisenionen in das Abwasser gelangen. Als Nebenreaktion kommt es zur Bildung von Wasserstoff

$$2\,H_3O^{+} + Fe^{\cdot} \rightarrow Fe^{++} + H_2 + 1\,H_2O$$

Das Reduktionsmittel Eisen wird als Material mit großer Oberfläche z.B. in Form von Pulver, feinen Granulaten, Spänen und Schwamm eingesetzt. Probleme treten bei der Zementation dadurch auf, daß
- es nicht möglich ist, das Kupfer durch die Bildung von Kupferschwamm oder kupfer-I-oxid-haltigem Kupfer abriebfest sowie formstabil auf dem Eisen abzuscheiden und
- der Eisenverbrauch ein vielfaches der stöchiometrisch erforderlichen Menge beträgt, so daß weitere Abwasserprobleme auftreten können.

Zur Abtrennung des Kupfer aus dem Abwasser ist bei diesen Verfahrenstechniken zusätzlich ein Filter erforderlich, wobei das Abwasser keinen Sauerstoff enthalten darf, da bereits reduziertes feinteiliges Kupfer in Gegenwart von Sauerstoff und Abwesenheit von metallischen Eisen wieder in Lösung geht.

Aufgabe der vorliegenden Erfindung ist es, die Kupferrückgewinnung durch Zementation mit Eisen so zu steuern, daß das Kupfer abriebfest und formstabil auf dem Eisen abgeschieden wird und die Bildung von Kupferschwamm oder Kupfer-I-Oxid zu vermeiden.

Es wurde nun gefunden, daß man die Nachteile bei der bisherigen Verfahrenstechnik vermeidet und das Kupfer abriebfest und formstabil auf Eisengranulaten abscheiden kann, wenn man die Zementation des Kupfers auf dem Eisen bei Potentialen, die auf die Silber-Silberchloridelektrode in gesättigter Kaliumchloridlösung bezogen sind; von -250 mV bis -350 mV bei einem pH-Wert von 0 bis 2 durchführt, wobei das maximale Arbeitspotential bei pH-Werten von $\geq 0$ je pH-Einheit um -58 mV bis auf -500 mV ansteigen kann.

Zur Bestimmung der Potentiale des Eisengranulates, das man in Form von durchströmten Schüttungen einsetzt, wird die Schüttung mit einer Hilfselektrode aus Graphit, Graphitfasermaterial oder Kupfer kontaktiert und gegen eine Referenzelektrode gemessen. Als Referenzelektroden kommen vorzugsweise Silber-Silberchlorid- oder Quecksilber-Quecksilberchlorid-Elektroden in gesättigter Kaliumchloridlösung in Betracht.

Die Potentialeinstellung des Eisengranulates kann durch Polarisation gegen eine inerte Hilfselektrode über eine äußere Spannungsquelle erfolgen. Als inerte Hilfselektroden kommen bevorzugt mit Platinmetallen oder Platinmetallmischoxiden beschichtetes Titan und/oder Niob und/oder Tantal in Betracht.

Bei kupferhaltigen Abwässern mit hohen Sauerstoffgehalten von $\geq 2$ mg/l und Kupfergehalten $\geq 1000$ ppm wird die Granulatschüttung bevorzugt negativ gegen die inerte Hilfselektrode polarisiert, während bei geringen Sauerstoffgehalten $\leq 0,1$ mg/l, Kupfergehalten $\leq 10$ ppm und niedrigen pH-Werten von $\leq 1$ allgemein eine positive Polarisation gegen die Hilfselektrode erfolgt.

Zur Polarisation der Schüttung wird die inerte Hilfselektrode von der Schüttung durch ein Diaphragma oder eine Ionenaustauschermembran separiert.

Anstelle der Potentialeinstellung über eine äußere Spannungsquelle kann das Potential der Schüttung, auch über den Sauerstoffgehalt des Abwassers, die Hydrodynamik und die Abwassermenge, die durch die Eisengranulatschüttung strömt, eingestellt werden. Entscheidend für das Potential ist neben dem Sauerstoffgehalt des Abwassers der effektive Stoffaustauschkoeffizient $k'$ für das Kupfer, der sich gemäß der Gleichung

$$k' = \frac{V\,(C_0 - C_E)}{A \cdot C_E} \quad 1 \cdot min^{-1} \cdot kg^{-1}$$

aus dem Feed V für das Kupferabwasser in l/min, der Eisenmenge A in kg, der Anfangskonzentration für Kupfer $C_0$ in $g/m^3$ und der Kupferendkonzentration $C_E$ in $g/m^3$ berechnet. Für eine abriebfeste Kupferabscheidung mit guter Eisenausbeute sind effektive Stoffaustauschkoeffizienten von $k' \geq 5$, erforderlich. Der Sauerstoffgehalt richtet sich nach dem pH-Wert und der Kupferkonzentration des Abwassers in der Weise, daß mit sinkendem pH-Wert und geringen Kupferkonzentrationen höhere Sauerstoffgehalte notwendig sind. Die Einstellung des Sauerstoffgehalts und damit des Arbeitspotentials erfolgt durch Begasung des Abwassers mit Luft. Die Strömungsgeschwindigkeit in der Schüttung sollte $\geq 0,1$ m/s betragen, damit ein guter Stoffübergang erreicht wird. Voraussetzung für eine ausreichende Turbulenz und gleichmäßige Durchströmung sind auch die Geometrie und Abmessungen der Eisengranulate. Als günstig haben sich Eisenspäne mit mindestens einer Drehung um die Längsachse und den Abmessungen von 0,5 bis 3 mm Dicke, 2 bis 30 mm Breite, 10 bis 100 mm Länge und einem Schüttgewicht von 0,2 bis 0,5 kg/l erwiesen. Neben Drehspänen kann aber auch Eisenwolle von 0,05 bis 0,5 mm Drahtstärke und einem Schüttgewicht von 0,05 bis 0,25 kg/l eingesetzt werden.

Das verwendete Eisen darf kein Chrom, Vanadium, Molybdän oder Nickel enthalten. Der Gehalt an den folgenden Elementen sollte bei Silizium $\leq 0,035$ %, Mangan $\leq 0,5$ % sowie Schwefel und/oder Phosphor $\leq 0,035$ % sein.

Die Eisengranulatschüttungen werden in Schüttbett-Reaktoren, vorzugsweise aus strömungstechnischen Gründen in Schüttbettrohrreaktoren eingesetzt. Der Austausch von Eisen durch Kupfer in der Schüttung kann 50 bis 98 % betragen, vorzugsweise erneuert man die Schüttung nach einem Eisenumsatz von 60 bis 80 %. Die Schüttung wird z.B. aus verfahrenstechnischen Gründen als gut durchströmbare, auswechselbare Patrone in den Rohrreaktor eingebaut.

Die Schüttbettreaktoren werden vorzugsweise in Kaskadenschaltung durchströmt, wobei im ersten Reaktor etwa 70 bis 90 % des Kupfers abgereichert werden. Im zweiten Reaktor erfolgt dann die Zementation des restlichen Kupfers. Zur Verbesserung des Stoffaustauschs ist es günstig, die Strömungsgeschwindigkeit durch zusätzliche Kreislauffahrweise in den einzelnen Kaskaden zu erhöhen. Bei der Abreicherung auf sehr geringe Kupferkonzentrationen hat sich als günstig erwiesen, den ersten Reaktor mit Eisenspänen und den nachfolgenden Reaktor mit Eisenwolle zu beschicken. Die Eisenmenge in dem zweiten Reaktor kann 1/10 bis 1/20 des Eisens vom ersten Reaktor betragen.

Neben der kontinuierlichen Fahrweise können die Reaktoren auch diskontinuierlich im Batchbetrieb gefahren werden. Bei diesem Betrieb ändert sich das Potential über die Versuchszeit und muß dann nachgeregelt werden.

Das anfallende Kupfer-Eisengemisch kann durch Nachbehandlung mit verdünnten Mineralsäuren von Eisenresten befreit werden.

Beispiel 1

An einem Schüttbettrohrreaktor von 80 mm Innendurchmesser und 1,5 m Länge werden 2,5 kg Eisendrehspäne mit einem Schüttgewicht von 0,36 kg/l eingefüllt. Die Abmessungen der Drehspäne betragen ~ 0,8 mm Dicke, 5 bis 6 mm Breite sowie 40 bis 50 mm Länge und sind 2 bis 3 mal um die Längsachse gedreht. Das verwendete Eisen enthält $\leq 0,03$ Gew.% Silizium, $\leq 0,5$ Gew.% Mangan und $\leq 0,035$ Gew.% Schwefel-Phosphoranteile. Zur Potentialmessung wird die Schüttung mit einer Graphitschnur kontaktiert. Das Potential der Schüttung wird gegen eine Silber/Silberchlorid-Referenzelektrode gemessen. Zusätzlich befindet sich in der Schüttung eine umpolbare, platinmetalloxidbeschichtete Titanstabelektrode, die über eine Gleichspannungsquelle mit einer am seitlichen Rand der Schüttung befindlichen, durch ein Diaphragma separierten, gleichartigen Elektrode polarisiert werden kann.

Zur Entkupferung eines Abwassers bestehend aus 5 Gew.% Schwefelsäure, 2 Gew.% Salzsäure, 3,5 Gew.% Natriumhydrogensulfat, 0,2 Gew.% organisch gebundenem Kohlenstoff und 0,23 Gew.% Kupfer wird der Reaktor mit einem Feed von 1,8 l Abwasser/Min betrieben. Zur Verbesserung des Stoffaustauschs wird das Abwasser zusätzlich mit einer Geschwindigkeit von 0,5 m/s im Kreislauf durch die Schüttung gepumpt. Der Sauerstoffgehalt im Abwasser beträgt 0,1 mg/l. Das Potential beträgt ohne Polarisation ~ 220 mV gegen die Silber/Silberchloridelektrode. Nach einer kathodischen Polarisation mit 0,75 A stellt sich ein Arbeitspotential von 270 mV gegen die Silber-Silberchloridelektrode ein. Beim Dauerbetrieb unter diesen Bedingungen wird das Kupfer ohne Abrieb auf der Schüttung abgeschieden und ein Kupferrestgehalt im Abwasserablauf von 5 bis 8 ppm erreicht.

Beispiel 2

Ein Schüttbettrohrreaktor wie in Beispiel 1 wird mit 0,8 kg Eisenwolle mit einem Schüttgewicht von 0,125 kg/l gefüllt. Die Drahtstärke der Eisenwolle beträgt 0,15 mm. Das verwendete Eisen enthält 0,03 Gew.% Silizium, ≤ 0,5 Gew.% Mangan und ≤ 0,035 Gew.% Schwefel-Phosphoranteile. Die Schüttung ist mit einer Graphitschnur kontaktiert über die das Potential gegen eine Silber-Silberchloridelektrode gemessen wird. Der Reaktor wird mit einem Abwasser bestehend aus 5,7 Gew.% Schwefelsäure, 3,2 Gew.% Natriumhydrogensulfat, ~ 0,05 Gew.% organisch gebundenem Kohlenstoff und 0,16 Gew.% Kupfer kontinuierlich bei einem Potential von -280 mV, bezogen auf die Silber-Silberchloridelektrode, mit einem Feed von 2,5 l Abwasser/Min betrieben. Das Potential wird durch die Polarisation gegen eine mit Platinmetallmischoxiden beschichtete Titanstabelektrode eingestellt. Der Kupfergehalt im Auslaufwasser beträgt ~ 1 ppm. Die Kupferabscheidung gelingt ohne Abrieb.

Beispiel 3

Ein Schüttbettrohrreaktor wie in Beispiel 1 wird mit 2,0 kg Eisendrehspänen von 0,3 mm Dicke, 3 bis 5 mm Breite sowie 30 bis 50 mm Länge, die mindestens 2 mal um die Längsachse gedreht sind, gefüllt. Das Schüttgewicht beträgt 0,4 kg/l. Das verwendete Weisen enthält ≤ 0,02 Gew.% Silicium, ≤ 0,3 Gew.% Mangan und ≤ 0,035 Gew.% Schwefel-Phosphoranteile. Die Potentialmessung erfolgt, nach Kontaktierung der Schüttung mit einer Graphitschnur, gegen eine Silber/Silberchloridelektrode.

Zur Entkupferung des Abwassers, das 10,5 Gew.% Schwefelsäure, 1,2 Gew.% Salzsäure, 3,1 Gew.% Natriumsulfat, 0,028 Gew.% organisch gebundenen Kohlenstoff und 0,08 Gew.% Kupfer enthält, wird der Reaktor mit einem Feed von 2,0 l Abwasser/Min. betrieben. Es stellt sich ein Potential von -380 mV gegen die Silber/Silberchloridelektrode ein. Nach Begasung des Abwassers mit Luft steigt der Sauerstoffgehalt von ~ 0,1 mg/l auf 2,4 mg/l und das Arbeitspotential von -380 mV auf -310 mV an. Beim Dauerversuch unter diesen Bedingungen wird das Kupfer abriebfest auf der Schüttung abgeschieden, wobei der Kupferrestgehalt im Abwasser ~ 2 ppm beträgt.

**Ansprüche**

1. Verfahren zur Entfernung von Kupfer aus Abwässern, die Anionen von Mineralsäuren enthalten, durch Zementation mit Eisengranulaten, dadurch gekennzeichnet, daß man die Zementation des Kupfers auf dem Eisen bei Potentialen, die auf die Silber-Silberchloridelektrode in gesättigter Kaliumchloridlösung bezogen sind, von -250 mV bis -350 mV bei einem pH-Wert von 0 bis 2 durchführt, wobei das maximale Arbeitspotential bei pH-Werten von ≥ 0 je pH-Einheit um -58 mV bis auf -500 mV ansteigen kann.

2. Verfahren zur Entfernung von Kupfer nach Anspruch 1, dadurch gekennzeichnet, daß das Potential des Eisengranulates durch Polarisation gegen eine Hilfselektrode über eine äußere Spannungsquelle eingestellt wird.

3. Verfahren zur Entfernung von Kupfer nach Anspruch 1, dadurch gekennzeichnet, daß das Potential über den Sauerstoffgehalt des Abwassers und die Abwassermenge, die durch die Eisengranulatschüttung strömt eingestellt wird.

4. Verfahren zur Entfernung von Kupfer nach Anspruch 1 bis 3, dadurch gekennzeichnet, daß man als Eisengranulat Eisendrehspäne, die mindestens eine Längsdrehung aufweisen, mit den Abmessungen von 0,5 bis 3 mm Dicke, 2 bis 30 mm Breite, 10 bis 100 mm Länge und einem Schüttgewicht von 0,2 bis 0,5 kg/h einsetzt.

5. Verfahren zur Entfernung von Kupfer nach Anspruch 1 bis 4, dadurch gekennzeichnet, daß man Eisen mit einem Gehalt von ≤ 0,35 % Silizium, ≤ 0,5 % Mangan, ≤ 0,035 % Schwefel und/oder Phosphor ohne Chrom und Vanadium verwendet.

6. Verfahren zur Entfernung von Kupfer nach Anspruch 1 bis 5, dadurch gekennzeichnet, daß man das Eisengranulat in einem statischen Schüttbett-Rohrreaktor einsetzt und mit dem kupferhaltigen, mineralsauren Abwasser durchströmt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CHEMICAL ABSTRACTS, Band 83, Nr. 6, 11. August 1975, Seite 279, Nr. 47827d, Columbus, Ohio, US; T.L. JESTER et al.: "Industrial waste treatment at Scovill Manufacturing Co., Waterbury, Connecticut", & ENG. BULL. PURDUE UNIV., ENG. EXT. SER. 1973, 142, Pt 1,129-37 --- | 1 | C 02 F 1/62 C 02 F 1/70 |
| A | CHEMICAL ABSTRACTS, Band 86, Nr. 24, 13. Juni 1977, Seite 536, Nr. 179456d, Columbus, Ohio, US; W.A. JANCUK: "Electrochemistry of copper waste water treatment by iron cementation", & PREPR. PAP. NATL. MEET., DIV. ENVIRON. CHEM., AM. CHEM. SOC. 1975, 5(2), 68-71 --- | 1,3 | |
| A | US-A-3 922 224 (ETUDES ET PROCEDES D'ASSAINISSEMENT PURATOR EPAP S.A.) * Spalte 11, Anspruch 1; Spalte 12, Anspruch 4; Spalte 9, Beispiel 1; Spalte 7, Zeilen 11-33 * --- | 1-4 | |
| A | FR-A-2 582 321 (C.J.M. ESNAULT) * Titelseite; Zusammenfassung; Figur * ------ | 1,2,6 | RECHERCHIERTE SACHGEBIETE (Int. Cl.4) C 02 F |

Der vorliegende Recherchenbericht wurde für alle Patentansprüche erstellt

| Recherchenort | Abschlußdatum der Recherche | Prüfer |
|---|---|---|
| DEN HAAG | 16-02-1989 | TEPLY J. |